**Europäisches Patentamt**

**European Patent Office**

**Office européen des brevets**

(19)

(11) Publication number: **0 003 398**
**B1**

(12) # EUROPEAN PATENT SPECIFICATION

(45) Date of publication of patent specification: **02.09.81**

(21) Application number: **79300050.6**

(22) Date of filing: **11.01.79**

(51) Int. Cl.³: **C 07 C 25/12,**
**C 07 C 17/38, B 01 D 29/10**

(54) **Process for collecting hexachlorobenzene by-product from perchloroethylene.**

(30) Priority: **11.01.78 US 868652**

(43) Date of publication of application:
**08.08.79 Bulletin 79/16**

(45) Publication of the grant of the European patent:
**02.09.81 Bulletin 81/35**

(84) Designated Contracting States:
**BE DE FR GB NL**

(56) References cited:
**DD - A - 118 063**
**DE - A - 1 584 878**
**DE - A - 1 658 055**
**DE - A - 2 401 183**
**DE - U - 1 893 534**
**DE - U - 1 948 331**
**FR - A - 1 492 961**
**US - A - 2 777 003**
**US - A - 3 274 269**
**US - A - 3 907 910**

(73) Proprietor: **STAUFFER CHEMICAL COMPANY**
**Westport Connecticut 06880 (US)**

(72) Inventor: **Blunk, John Ross**
**4514 Blenheim Road**
**Louisville Kentucky 40207 (US)**
Inventor: **Rozmus, Glenn Frank**
**131 Sunnyside Lane**
**Columbia Tennessee 38401 (US)**

(74) Representative: **Smith, Sydney. et al,**
**Elkington and Fife High Holborn House 52/54**
**High Holborn**
**London WC1V 6SH (GB)**

Courier Press, Leamington Spa, England.

## Process for collecting hexachlorobenzene by-product from perchloroethylene

The present invention relates to an improved method for recovering hexachlorobenzene by-product from carbon tetrachloride and perchloroethylene manufacturing processes. More particularly, the present invention relates to the recovery of hexachlorobenzene by-product from carbon tetrachloride and perchloroethylene manufacturing processes by a method which is easily incorporated in the manufacturing process, minimizes the release of objectionable vapours to the atmosphere, and recovers this waste material in a form which facilitates its handling for ultimate disposal.

Carbon tetrachloride and perchloroethylene are produced commercially by the substitution chlorination of aliphatic hydrocarbons, olefinic hydrocarbons, or partially chlorinated aliphatic hydrocarbons. The production of carbon tetrachloride and perchloroethylene is accompanied by the coproduction of several by-products such as hexachloroethane, hexachlorobutane, hexachlorobutadiene, hexachloroheptane, and hexachlorobenzene. Of these coproduced by-products, virtually all of them, except the hexachlorobenzene can be recycled as a feed stream to the reactor. Hexachlorobenzene, however, is relatively nonreactive and must be removed from the process as a waste stream.

Several methods have been found for reducing the amount of hexachlorobenzene produced as a by-product of the production of carbon tetrachloride and perchloroethylene. For example, it has been observed that feed stocks having less than four carbon atoms in their molecules have a lesser tendency to form hexachlorobenzene than those having more than four carbon atoms in their molecules. It has also been observed that the production of hexachlorobenzene by-product may be limited by conducting the chlorination reaction below about 650°C.

Therefore, by proper choice of feed stock material and careful control of reaction temperature, the amount of hexachlorobenzene by-product produced may be minimized. Although minimized in quantity, sufficient hexachlorobenzene is still produced as a by-product to make recovery and proper disposal a necessity.

The proper handling and disposal of the hexachlorobenzene by-product is a problem which has posed a great deal of difficulty to the art.

The hexachlorobenzene by-product of the carbon tetrachloride/perchloroethylene manufacturing process is generally produced in the form of a hexachlorobenzene-containing molten waste stream having a temperature generally within the range of 230°C. to about 260°C. Traditionally, this molten material is collected for disposal by accumulating it in suitable containers, such as steel drums, and allowing it to cool and solidify.

During the cooling and solidification of the hexachlorobenzene by-product. in the containers, extraordinary efforts must be made to control the objectionable vapours which emanate therefrom, and this often requires the installation of expensive vapour-handling equipment.

Once solidified, the material may be handled as a solid waste and disposed of in such a manner as to prevent its sublimation into the atmosphere. It may, for example, be buried in a properly prepared landfill site.

In an alternative method, the molten hexachlorobenzene by-product stream is directed to a lagoon containing several inches of water. The molten waste material sinks to the bottom of the lagoon where it is allowed to cool and solidify. While the material is cooling, escape of objectionable vapours from the material to the atmosphere is effectively prevented by the covering water layer. Eventually, however, the lagoon becomes filled with solid hexachlorobenzene waste material which must then be excavated and transferred to an appropriate disposal site. This method of collecting the hexachlorobenzene-containing waste material and preparing it for disposal materially adds to the cost of producing carbon tetrachloride and perchloroethylene; the lagoons are costly to construct, and the equipment required to excavate the solidified waste material from the lagoons is expensive to purchase and operate.

A need therefore exists for an improved process for collecting hexachlorobenzene by-product from the carbon tetrachloride and perchloroethylene manufacturing processes, which facilitates disposal, and the invention provides such process.

According to the invention one mixes the molten hexachlorobenzene by-product with water to form a slurry consisting of solid particles of hexachlorobenzene in water and then the solidified material is recovered by passing the slurry through a combination filter/package device, which facilitates the disposal of the solid particulate material without further handling.

For a fuller understanding of this invention, reference will now be made to the accompanying drawings in which:—

Fig. 1 is a generalized diagrammatic representation of a well-known process for producing perchloroethylene and carbon tetrachloride in which hexachlorobenzene by-product is coproduced;

Fig. 2 illustrates one embodiment of this invention for collecting the hexachlorobenzene by-product produced by the process of Fig. 1;

Fig. 3 is a diagrammatic representation of the filter/package device shown in Fig. 2; and

Fig. 4 illustrates an alternative embodiment of the method of this invention for collecting the hexachlorobenzene by-product.

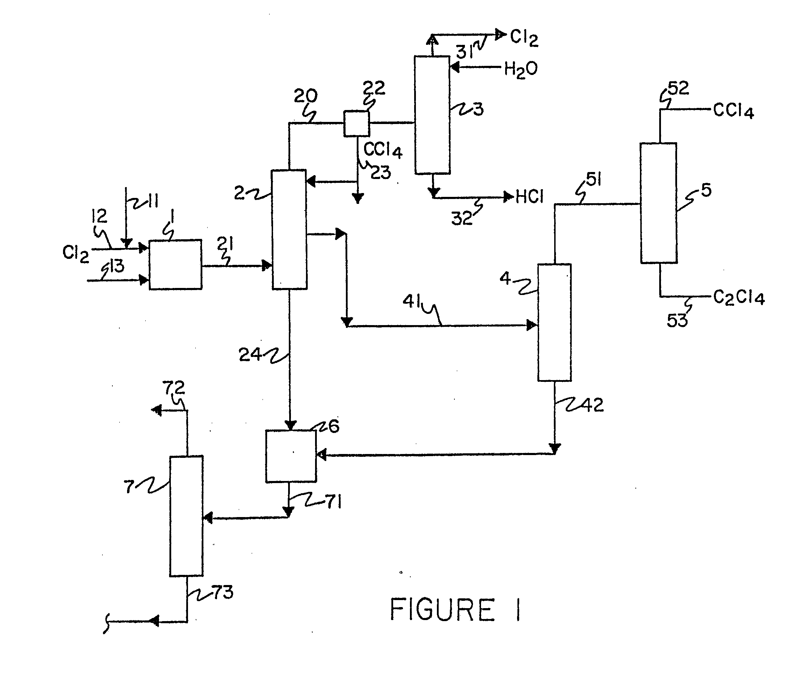

Referring to Fig. 1, a vapourized hydrocarbon feed material such as, for example, ethane or propane, is continuously fed into Reactor 1 through Line 13 together with chlorine gas which is fed through Line 12. The relative feed rates of hydrocarbon to chlorine are adjusted to provide a 10 to 25% by weight excess of chlorine over the stoichiometric amount required for the reaction between the hydrocarbon and chlorine. The temperature of the reacting mass within Reactor 1 is maintained between 500°C. and 700°C. by a variety of techniques known in the art. Thus, for example, a portion of the perchloroethylene and/or carbon tetrachloride produced may be recycled to the Reactor 1 through Line 11 to act as a diluent/heat-sink. The recycle rate of the material may be adjusted so that a sufficient amount of the heat generated by the exothermic reaction taking place in Reactor 1 is absorbed to maintain reaction temperature within the desired range.

Upon reaching reaction temperature, the reaction between the hydrocarbon and chlorine takes place almost instantaneously to produce carbon tetrachloride and prechloroethylene with the relative amount of each produced being inversely proportional to the relative amounts in the diluent vapours.

The reaction product comprising perchloroethylene, carbon tetrachloride, chlorine, hydrogen chloride, and by-products passes from Reactor 1 through Line 21 to Distillation Column 2, entering at a point below the surface of liquid quench material maintained in the sump of Distillation Column 2. The quenching liquid in the sump of Distillation Column 2, consisting mainly of perchloroethylene, is continuously vapourized by the heat absorbed from the gases entering from Reactor 1, which in turn are partially condensed.

The partially condensed material contains hexachlorobenzene by-product; this material is continuously removed through Column Bottoms Line 24 and transferred to Surge Tank 6. The uncondensed vapours entering from Reactor 1 and the material vapourized from the column sump are fractionated in the column to an overhead product comprising carbon tetrachloride, chlorine, and hydrogen chloride; and an intermediate product comprising perchloroethylene, some carbon tetrachloride as well as various by-products. The overhead product passes through Line 20 to Condenser 22 where the carbon tetrachloride is condensed out while the chlorine and hydrogen chloride vapours pass on to Water Scrubber 3 in which the hydrogen chloride is absorbed by water, and the chlorine gas is removed through Line 31 as overhead product, which may be dried and recycled to Reactor 1.

The carbon tetrachloride, which is condensed in Condenser 22, may be returned to Column 2 as reflux or removed through Line 23 as product.

The intermediate product from Column 2 is fed to Distillation Column 4 through Line 41 to be further fractionated to form an overhead product comprising perchloroethylene and carbon tetrachloride and a bottoms product comprised of "heavy-ends" material. This heavy-ends material, containing hexachlorobenzene by-product, then passes through Line 42 to Surge Tank 6. The perchloroethylene/carbon tetrachloride overhead product from Distillation Column 4 passes through Line 51 and is further distilled in Column 5 where the carbon tetrachloride is taken off as overhead product through Line 52, and the perchloroethylene is taken as bottoms product through Line 53.

The "heavy-ends" material accumulated in Surge Tank 6, comprising the bottoms products from Distillation Columns 2 and 4, contains the hexachlorobenzene, hexachloroethane, hexachlorobutane, hexachlorobutadiene, hexachloroheptane, and other heavy polychlorinated hydrocarbon by-products produced in the chlorination reaction. All of these compounds, except hexachlorobenzene, may be converted to carbon tetrachloride or perchloroethylene when returned to Reactor 1. Therefore, this material is fed through Line 71 to Column 7 where it is fractionated to separate the hexachlorobenzene from the other by-product compounds. Essentially all of the hexachlorobenzene is removed as bottoms product through Line 73 while most of the remaining compounds are removed as overhead product through Line 72. The overhead product may then be recycled to Reactor 1 through Line 11.

The hexachlorobenzene-containing by-product leaving the process through Line 73 is made up principally of hexachlorobenzene, but may also contain other by-products of the chlorination reaction such as hexachloroethane, hexachlorobutane, hexachlororbutadiene and hexachloroheptane. The hexachlorobenzene content of this material generally ranges from 50% to 70% by weight or more. For simplicity, this material is referred to herein as "hexachlorobenzene by-product".

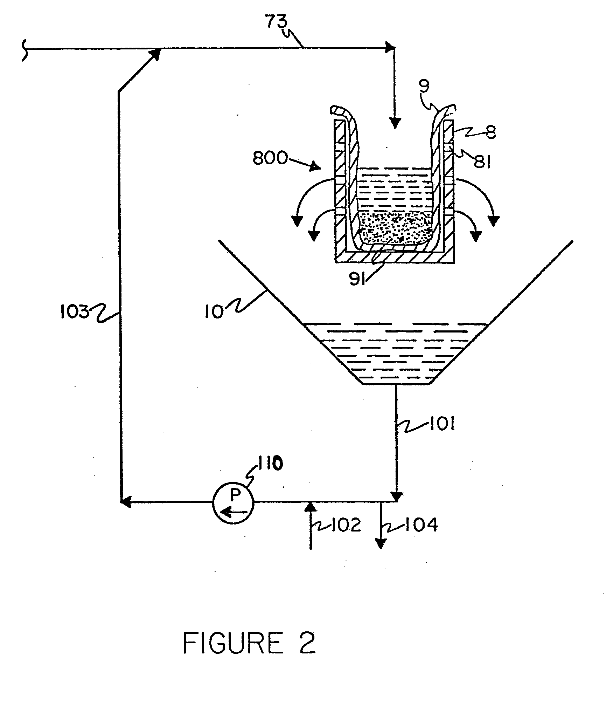

Referring to Fig. 2, water at a predetermined continuous rate is injected (Line 103) directly into the molten hexachlorobenzene by-product in Line 73. The water in Line 103 is maintained at a temperature suitable for quenching the molten hexachlorobenzene by-product through the use of an in-line water cooler (not shown), the addition of cold make-up water through Line 102, and the withdrawal of warm water through Drain 104, or a combination of these two methods.

Satisfactory results are generally obtained with water temperatures ranging from 5°C. to 50°C. at the point of injection and water-injection rates ranging from 0.4 to 0.5 kg.

water/kg. hexachlorobenzene-containing by-product.

The water which is injected into the hexachlorobenzene by-product quenches it and causes it to become transformed from the molten state to a solid particulate state, thereby forming a slurry. This transformation takes place almost instantaneously and, therefore, the contact time required in Line 73 can be quite short, generally ranging from as little as $\frac{1}{2}$ to $1\frac{1}{2}$ seconds.

The resulting slurry is then conveyed by Line 73 to Filter/Package Device 800. As the slurry passes through this device, the hexachlorobenzene by-product particles are separated from the slurry and retained within the device.

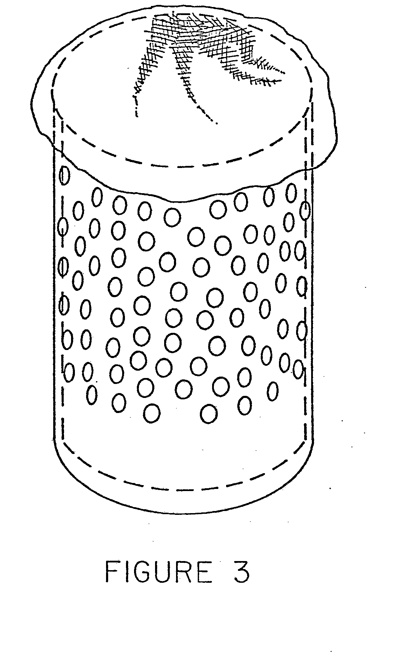

As illustrated in Fig. 3, Filter/Package Device 800 comprises a steel drum (8), such as a standard 55-gallon (20.2-litre) open-top steel drum, having an insert or liner (9) formed of an ordinary burlap bag. The drum has a plurality of perforations (81) in the upper portion of its sidewall beginning 6 inches (12.7 mm) from the bottom. These perforations may be of any design and pattern which will permit the drainage of water from the drum at a rate sufficient to balance the inflow from Line 73. By leaving the lower portion of the sidewall and bottom without holes, a sump is created in the bottom of the drum. This enables any non-solidified organic materials, such as perchloroethylene, which may be present in the by-product stream, to be accumulated in the drum instead of being discharged with water stream. Where this feature is not required, however, holes may be provided over the entire sidewall surface as well as through the bottom of the drum.

The burlap bag used as a liner may be any of several commonly available types. Particularly good results have been obtained with burlap bags fabricated from 101.6 cm. by 248.9 cm. (40" by 98") sections of burlap sheets woven from standard (194.4 gm./m.) thread, the sheets having a weight ranging from 0.23 kg. to 0.25 kg./m².

The solid particulate hexachlorobenzene by-product (91) is accumulated in Liner 9 while water from the slurry passes through Liner 9 and Perforations 81 of Drum 8 into Sump 10 where it is recovered and recycled through Line 101 to Pump 110 and then back to Line 73 through Line 103. The total amount of water in the system, as indicated by the water level in Sump 10, is maintained by adding make-up water to the system through Line 102.

When Filter/Package Device 800 is filled to capacity with the solid particulate hexachlorobenzene by-product, it is removed from the system, a standard drum cover is optionally installed, and the drum and contents are then disposed of by conventional means. Alternatively, the liner containing the waste material may be removed and disposed of and the drum reused with a new liner.

A replacement filter is brought into place in the system, and the operation is repeated.

In an alternate embodiment of the filter/package device, the means for enabling the liquid to flow out of the storage space comprise one or more bung holes in the bottom and/or side of the drum. This alternate has the further advantage of enabling the filter/package device to be completely sealed once filled by covering the top with a standard drum cover and placing bungs in the bung holes.

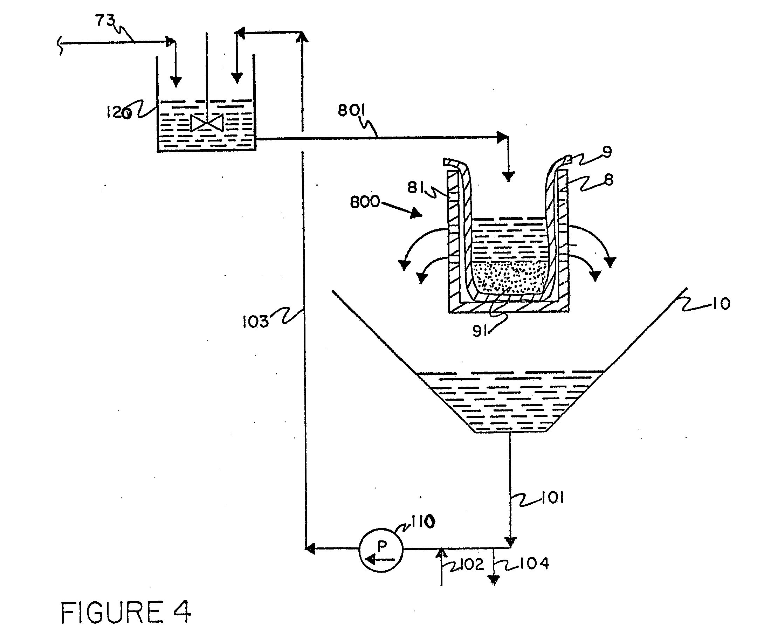

Fig. 4 illustrates an embodiment of the process of this invention identical to that illustrated in Fig. 2 except that the in-line injection of water illustrated in Fig. 2 is replaced by Mixing Tank 120 wherein the hexachlorobenzene-containing by-product is dispersed in water with the aid of a mixing device. The slurry which is formed in Tank 120 is conveyed by Line 801 to Filter/Package Unit 800, and the filtration operation proceeds as previously described.

The invention thus provides a process for collecting molten hexachlorobenzene by-product produced in the preparation of perchloroethylene or carbon tetrachloride in a solid form characterised in that one mixes the molten hexachlorobenzene with water at a temperature sufficient to solidify it so that a slurry is formed and one then passes the slurry through a combination filter and package device, comprising:

(a) a housing (8) having an opening for admitting the slurry into it, the housing being provided with a series of perforations (81) through at least a portion of said housing, through which the aqueous portion of the slurry may pass, and with an interior liner 9 of a filter material suitable for filtering the solid particulate hexachlorobenzene from the slurry, whereby the solid particulate hexachlorobenzene collects in the liner.

The process of the present invention may be practiced in conjunction with any of the known methods of producing perchloroethylene/carbon tetrachloride wherein a waste stream containing hexachlorobenzene is coproduced. Thus, for example, the method of this invention may be practiced in conjunction with the process of producing perchloroethylene/carbon tetrachloride as disclosed in U.S. Patent 2,839,589; U.S. Patent 2,441,528; U.S. Patent 2,806,768; or U.S. Patent 2,857,438. Hexachlorobenzene by-product is collected from perchloroethylene and carbon tetrachloride manufacturing processes in accordance with the process of this invention in a form which is easy to handle for subsequent disposal. This material takes the form of sand-like particulate matter, which is much easier to handle than either the molten material or the solid blocks of material formed by the prior art methods. An even more important advantage of the process of this invention is that it substantially reduces the amount of objectionable vapours that are released from the hexachlorobenzene by-product to the atmosphere during the collection process as compared to many prior art techniques. This is because the material is not exposed to the atmosphere until it has been converted from the molten form to the solid particulate form.

A further advantage of this process is that the final separation of the hexachlorobenzene by-product from the water in which it is solidified is so complete that the water is essentially free of particulate matter and can be reused without further treatment.

The filter/package device used according to the invention is especially useful in recovering solid particulate hexachlorobenzene by-product from an aqueous slurry thereof in accordance with the process of this invention and packaging the same. When so packaged, the solid particulate hexachlorobenzene by-product is easy to handle for ultimate disposal.

In constructing the combination filter/package device of this invention, it will be found convenient to form the housing for the device out of an open-topped drum such as a standard 55-gallon (208.2-litre) open-topped steel drum. Perforations, preferably ranging in size from 50 mm² to 95 mm², can be made in the drum/housing by any of a variety of techniques such as drilling, punching, and the like to provide means for enabling liquid to flow out of the drum; and a burlap bag can be inserted into the drum/housing as a filter medium/liner.

In order that the present invention be more fully understood, the following examples are given by way of illustration. All parts and percentages are by weight unless otherwise specifically designated.

## Example 1

A combination filter/package unit, such as that shown in Fig. 3, is constructed by punching holes through the sides of a 55-gallon (208.2-litre) open-topped steel drum, beginning at 6 inches (15.24 cm.) from the bottom, and inserting a burlap bag into the drum as a liner.

## Example 2

A stream of molten hexachlorobenzene by-product is taken from a commercial perchloroethylene/carbon tetrachloride manufacturing facility. This material is taken through a two-inch (50.8 mm.) nominal diameter pipeline which is equipped with external heating means to maintain the molten hexachlorobenzene at a temperature of approximately 250°C. The flow rate of the molten hexachlorobenzene by-product in the pipeline is estimated to be approximately 30.5 kg./min.

At a point in the pipeline where the external heating is discontinued, water at an initial temperature of 14.4°C. is injected into the pipeline at an estimated flow rate of 35 kg./min. The water is injected through a $\frac{1}{2}''$ (12.7 mm.) diameter water injection nozzle inserted in the pipeline at an angle 45° to the direction of flow and terminating at the approximate center of the pipeline. This water is taken from a sump, such as is shown schematically in Fig. 2, which initially contains 500 litres (500 kg.) of water.

The material flowing in the pipeline is then discharged into a filter/package device such as that described in Example 1. The material discharged from the pipeline is observed to be in the form of a slurry.

It is noted that smoke, which is normally given off in large quantity by molten hexachlorobenzene by-product when exposed to the atmosphere, is not given off by this material.

Solid particulate hexachlorobenzene by-product, having the physical appearance of a coarse sand, accumulates inside the filter/package device while water drains from the holes in the device into the sump below (as shown in Fig. 2). Water from the sump is continuously recycled to the hexachlorobenzene by-product pipeline with no make-up water being added from external sources and no external cooling employed.

After filling five filter/package units, such as those described in Example 1, approximately 190 litres of water remains in the sump, and the temperature of this water is observed to have increased to 45.7°C. The water appears to be free of suspended solids, indicating substantially complete removal of the hexachlorobenzene particles from the slurry.

## Example 3

A sample of hexachlorobenzene by-product particles collected in filter/package devices in accordance with the procedure outlined in Example 2 is analyzed for particle size distribution. The results of this analysis, using U.S. Sieve Series Screens, are as follows:

| U.S. Sieve Series Screen Size | Wt.% Retained |
|---|---|
| 10 (2.00 mm) | 15.8% |
| 20 (0.841 mm) | 60.0% |
| 40 (0.420 mm) | 17.4% |
| 60 (0.250 mm) | 5.5% |
| Through No. 60 Screen | 1.3% |

## Example 4

The process of this invention is tested in accordance with the procedure outlined in Example 2. A first sample of water is taken at the point where water is injected into the hexachlorobenzene by-product pipeline. A second sample of water is taken where the water drains out of the filter/package device. Both samples are analyzed for suspended solids with the following results:

| Sample | Suspended Solids (% by Weight) |
|--------|-------------------------------|
| First | 0 |
| Second | 0.001 |

This indicates that very little hexachlorobenzene remains in the water after the recovery step.

It will thus be seen that the hexachlorobenzene by-product is collected in accordance with the process of this invention in a manner which eliminates the exposure of molten hexachlorobenzene by-product to the atmosphere and, therefore, substantially lessens the amount of objectionable fumes which are released to the atmosphere from this material. Moreover, the by-product material is recovered in filter/package units which are convenient to handle and facilitate the ultimate disposal of this waste material.

## Claims

1. A process for collecting molten hexachlorobenzene by-product produced in the preparation of perchloroethylene or carbon tetrachloride in a solid form characterised in that one mixes the molten hexachlorobenzene with water at a temperature sufficient to solidify it so that a slurry is formed and one then passes the slurry through a combination filter and package device, comprising: (a) a housing (8) having an opening for admitting the slurry into it, the housing being provided with a series of perforations (81) through at least a portion of said housing; through which the aqueous portion of the slurry may pass, and with an interior liner 9 of a filter material suitable for filtering the solid particulate hexachlorobenzene from the slurry, whereby the solid particulate hexachlorobenzene collects in the liner.

2. A process as claimed in claim 1 characterised in that the mixing of the molten hexachlorobenzene and water is carried out by injecting water into a flowing stream of the molten hexachlorobenzene by-product.

3. A process as claimed in claim 2 characterised in that the water is injected into the molten hexachlorobenzene by-product in an amount within the range of 0.4 kg water/kg hexachlorobenzene by-product to 0.5 kg water/kg hexachlorobenzene by-product.

4. A process as claimed in any of claims 1 to 3 characterised in that the molten hexachlorobenzene by-product is at a temperature within the range of 230 to 260°C, prior to mixing with the water.

5. A process as claimed in any of claims 1 to 4 in which the water is at a temperature of 5°C to 50°C.

6. A process as claimed in any of claims 1 to 5 characterised in that the liner (9) of the filter and package device is made up of a burlap bag and the housing is an open-topped drum.

7. A process as claimed in claim 6 characterised in that the solid particulate hexachlorobenzene is allowed to accumulate in the burlap bag until it is substantially full when the drum is closed with a cover and the bag and drum disposed of as a unit or the bag is removed and disposed of separately.

8. A process for the preparation of perchloroethylene or carbon tetrachloride by substitution chlorination of hydrocarbons with the production of by-product hexachlorobenzene characterised in that the by-product hexachlorobenzene is collected by a process as claimed in any of claims 1 to 7.

## Revendications

1. Procédé pour la récuperation d'un sous-produit fondu à base d'hexachlorobenzène obtenu lors de la préparation du perchloroéthylène et du tétrachlorure de carbone sous une forme solide, caractérisé en ce que l'on mélange l'hexachlorobenzène fondu avec de l'eau à une température suffisante pour sa solidication de manière qu'il se forme une bouillie et que l'on fait passer ensuite la bouillie à travers une combinaison d'un dispositif filtre-emballage comprenant:

a) un logement 8 doté d'un orifice d'admission pour la bouillie, le logement étant muni d'une série de perforations 81 sur au moins une partie de celui-ci, à travers laquelle peut passer la fraction aqueuse de la bouillie et d'une garniture intérieure 9 en une matière filtrante destinée à la filtration de l'hexachlorobenzène particulaire solide, moyennant quoi l'hexachlorobenzène particulaire solide, est recueilli dans la garniture.

2. Procédé selon la revendication 1, caractérisé en ce que le mélange de l'hexachlorobenzène fondu et de l'eau s'effectue par injection de l'eau dans un courant de circulation du sous-produit fondu à base d'hexachlorobenzène.

3. Procédé selon la revendication 2, caractérisé en ce que l'eau est injectée dans le sous-produit fondu à base d'hexachlorobenzène en une quantité s'étendant de 0,4 kg d'eau/kg de sous-produit à base d'hexachlorobenzène à 0,5 kg d'eau/kg de sous produit à base d'hexachlorobenzène.

4. Procédé selon l'une quelconque des revendications 1 à 3, caractérisé en ce que le sous-produit fondu à base d'hexachlorobenzène est à une température entre 230 et 260°C avant le mélange avec l'eau.

5. Procédé selon l'une quelconque des revendications 1 à 4, caractérisé en ce que l'eau est à une température de 5 à 50°C.

6. Procédé selon l'une quelconque des revendications 1 à 5, caractérisé en ce que la garniture intérieure 9 du dispositif filtre/emballage est constitué par un sac de toile d'emballage et que le logement est un fût ouvert à son sommet.

7. Procédé selon la revendication 6, caractérisé en ce qu'on laisse s'accumuler l'hexachlorobenzène particulaire solide dans le sac en toile d'emballage jusqu'à ce qu'il soit presque plein lorsque le fût est fermé avec un couvercle, que le sac et le fût sont évacués ensemble ou que le sac est retiré et jeté séparément.

8. Procédé pour la préparation de perchloroéthylène ou de tétrachlorure de carbone par chloration substituante d'hydrocarbures avec production d'hexachlorobenzène en tant que sous-produit, caractérisé en ce que l'hexachlorobenzène en tant que sous-produit est récupéré par un procédé tel que revendiqué dans l'une quelconque des revendications 1 à 7.

**Patentansprüche**

1. Verfahren zum Abziehen von geschmolzenem Hexachlorbenzol, das bei der Herstellung von Perchlorethylen oder Tetrachlorkohlenstoff in fester Form als Nebenprodukt gebildet wird, dadurch gekennzeichnet, daß das geschmolzene Hexachlorbenzol mit Wasser vermischt wird, dessen Temperatur ausreicht, um das Hexachlorbenzol erstarren zu lassen, so daß eine Trübe erhalten wird, und daß diese Trübe dann durch eine kombinierte Filtersäule geleitet wird, die (a) aus einem Gehäuse (8) mit einer Zulauföffnung für die Trübe und Durchbrüchen (81) in zumindest einem Teilabschnitt des Gehäuses zum Durchtritt der wässrigen Phase der Trübe und (b) einer Innenauskleidung (9) aus einem Filtermaterial besteht, das das feste, teilchenförmige Hexachlorbenzol aus der Trübe abzufiltrieren vermag, wobei das feste, teilchenförmige Hexachlorbenzol in der Innenauskleidung zurückgehalten wird.

2. Verfahren nach Anspruch 1, dadurch gekennzeichnet, daß das Mischen des geschmolzenen Hexachlorbenzols mit dem Wasser durch Einstrahlen von Wasser in den fließenden, das geschmolzene Hexachlorbenzol enthaltenden Nebenproduktstrom erfolgt.

3. Verfahren nach Anspruch 2, dadurch gekennzeichnet, daß das Wasser in das als Nebenprodukt auftretende geschmolzene Hexachlorbenzol in einer Menge im Bereich von 0,4 bis 0,5 kg Wasser pro kg Hexachlorbenzol eingestrahlt wird.

4. Verfahren nach einem der Ansprüche 1 bis 3, dadurch gekennzeichnet, daß das als Nebenprodukt auftretende geschmolzene Hexachlorbenzol vor dem Mischen mit dem Wasser eine Temperatur im Bereich von 230 bis 260°C aufweist.

5. Verfahren nach einem der Ansprüche 2 bis 4, dadurch gekennzeichnet, daß das Wasser eine Temperatur im Bereich von 5°C bis 50°C hat.

6. Verfahren nach einem der Ansprüche 1 bis 5, dadurch gekennzeichnet, daß die Innenauskleidung (9) der kombinierten Filtersäule aus einem Leinwandsack besteht und das Gehäuse eine oben offene Trommel ist.

7. Verfahren nach Anspruch 6, dadurch gekennzeichnet, daß das feste, teilchenförmige Hexachlorbenzol solange in dem Leinensack angesammelt wird, bis dieser zumindest im wesentlichen gefüllt ist, daß dann die Trommel mit einem Deckel verschlossen wird, und daß dann der gefüllte Sack und die Trommel als Einheit auf die Deponie gegeben werden, oder daß der Sack aus der Trommel herausgenommen und getrennt von dieser verworfen wird.

8. Verfahren zur Herstellung von Perchlorethylen oder Tetrachlorkohlenstoff durch Substitutionschlorierung von Kohlenwasserstoffen unter Bildung von Hexachlorbenzol als Nebenprodukt, dadurch gekennzeichnet, daß das als Nebenprodukt gebildete Hexachlorbenzol nach dem Verfahren nach einem der Ansprüche 1 bis 7 gesammelt und abgetrennt wird.

FIGURE 1

0 003 398

FIGURE 2

FIGURE 3

FIGURE 4